# EUROPÄISCHE PATENTSCHRIFT

(11) **EP 3 475 201 B1**
(45) Veröffentlichungstag und Bekanntmachung des Hinweises auf die Patenterteilung: **27.01.2021**
(21) Anmeldenummer: 17728141.7
(22) Anmeldetag: 31.05.2017
(51) Int. Cl.: B65G 47/53, B65G 47/244, B65G 1/04

(54) **VERFAHREN ZUR ÄNDERUNG DER AUSRICHTUNG VON PAKETEN IN EINEM FÖRDERSYSTEM**
METHOD FOR CHANGING THE ORIENTATION OF PACKAGES IN A TRANSPORT SYSTEM
PROCÉDÉ POUR MODIFIER L'ORIENTATION DE PAQUETS DANS UN SYSTÈME DE TRANSPORT

(30) Priorität: 23.06.2016 DE 102016111504
(43) Veröffentlichungstag der Anmeldung: 01.05.2019
(73) Patentinhaber: Dematic GmbH, 63150 Heusenstamm (DE)
(72) Erfinder: MEURER, Hans Christoph, 55234 Framersheim (DE)
(74) Vertreter: Moser Götze & Partner Patentanwälte mbB
(86) Internationale Anmeldenummer: PCT/EP2017/063218
(87) Internationale Veröffentlichungsnummer: WO 2017/220301

(56) Entgegenhaltungen:
- EP-A1- 1 574 459
- DE-A1-102004 046 176
- DE-A1-102009 032 406
- DE-A1-102011 005 402
- JP-A- 2000 247 406
- JP-A- 2000 255 763
- US-A- 6 139 240
- US-A1- 2014 291 114
- US-A1- 2015 336 741

## Beschreibung

Die Erfindung betrifft ein Verfahren zur Einlagerung von Paketen mit von einer Breite unterschiedlicher Länge des Paketbodens in ein Lagerregal, bei dem die Ausrichtung des Pakets wahlweise in Längs- und Quererstreckung erfolgt, wobei die Ausrichtung des Pakets zwischen einer Verteilstrecke und der Einlagerung im Lagerregal veränderbar ist.

Aus der US2014/0291114 A1 ist ein Fördersystem zur Änderung der Ausrichtung von Waren oder Paketen auf einer Förderstrecke bekannt, welches elf zu einer Förderschleife angeordnete Förderelemente umfasst. Diese Förderelemente bilden eine Hauptförderrichtung in "L-Form" und eine Verbindung der beiden Schenkel des "L" durch zwei weitere in einem etwa 90 Grad großen Winkel verbundene Förderstrecken. In dieser Förderschleife wird ein Paket von einem Eingangsförderer über einen weiteren Förderer zu einem ersten Transferpunkt transportiert. An diesem Transferpunkt, d.h. Transferförderer, wird das Paket entweder mit einer ursprünglichen Orientierung relativ zur Förderrichtung weitergeleitet oder es wird für eine Änderung der Ausrichtung über den Transferförderer in einem 90 Grad Winkel umgelenkt. Nach der Umlenkung über den ersten Transferförderer gelangt das Paket auf einen weiteren Förderer zu einem zweiten Transferförderer. Durch diesen zweiten Transferförderer wird die Förderrichtung erneut um 90 Grad geändert um das Paket der Hauptförderstrecke zuzuführen, allerdings mit um 90 Grad geänderter Ausrichtung im Vergleich zum Anfang der Förderschleife. Damit das Paket letztendlich zurück auf die Hauptförderstrecke gelangt, wird seine Förderrichtung erneut über einen Transferförderer geändert. Somit werden hier drei Transferpunkte benötigt, um die Orientierung eines Pakets zu ändern.

Aus US 6 139 240 A ist ein Verfahren nach dem Oberbegriff des Anspruchs 1 bekannt. Im Bereich der Lagertechnik bestehen steigende Anforderungen an die Zugriffszeiten von eingelagerten Waren bei steigendem Bedarf größerer Lagerflächen und einem höheren Durchsatz. Daher werden Waren zunehmend als Pakete im Einzelzugriff anstatt auf Paletten eingelagert. Insbesondere in der Bekleidungsindustrie und im Lebensmittelhandel haben diese Fördergüter, d.h. Einzelpakete, unterschiedliche Dimensionen. Um einen möglichst hohen Füllgrad des Lagers zu erreichen, kann daher abhängig von den Abmaßen der Grundfläche, d.h. des Paketbodens, eine längs oder quer ausgerichtete Lagerung von Vorteil sein. Hier besteht das Problem, jedes Paket auf dem Weg von der Verteilstrecke zur Lagergasse individuell längs oder quer zur Förderrichtung bzw. späteren Einlagerungsrichtung auszurichten.

Dieses Problem wird durch ein Verfahren gemäß Anspruch 1 gelöst.

Erfindungsgemäß wird bei einem Verfahren zur Einlagerung von Paketen mit von der Breite unterschiedlicher Länge in ein Lagerregal, bei dem die Ausrichtung des Pakets wahlweise in Längs- und Quererstreckung erfolgt und zwischen einer Verteilstrecke und der Einlagerung im Lagerregal veränderbar ist, wobei die Verteilstrecke Pakete zur Einlagerung anfördert und mindestens zwei Ausschleusungen aufweist, welche in je eine Einlagerstrecke in Richtung eines Lagerregals führen, wobei die Förderrichtung gleich der Paket-Einlagerrichtung ist, der Füllgrad dadurch erhöht, dass zwischen der Verteilstrecke und dem Lagerregal die Ausrichtung des Pakets um 90 Grad geändert wird, wozu jeweils zwischen der Verteilstrecke und dem Lagerregal zwei Einlagerstrecken sich kreuzend angeordnet sind, wobei über jede Einlagerstrecke mindestens zwei Lagerregalgassen erreichbar sind, und an der Kreuzungsstelle eine 90 Grad Weiche angeordnet ist, um wahlweise die Einlagerstrecke zu wechseln.

Eine solche Änderung der Paketorientierung hat den Vorteil, dass Pakete platzsparend eingelagert werden können, da die jeweils günstigste Paketorientierung gewählt werden kann. So können beispielsweise Regale ausschließlich mit Paketen in längs oder quer zur Förderrichtung ausgerichteter Orientierung befüllt werden, gleichzeitig sind aber auch Mischregale mit beiden Orientierungen möglich. Diese flexible Einlagerung erlaubt, die jeweils gegebenen Platzverhältnisse optimal auszunutzen. Ein weiterer Vorteil der Wählbarkeit der Paketorientierung ist eine mögliche Verschmälerung der Lagerregalgasse, da zur Ein- und Auslagerung von Paketen mit optimierter Orientierung Regalbediengeräte mit schmaleren Maßen verwendet werden können. Auch kann durch die Verwendung einer 90 Grad Weiche weitere Fördertechnik zum Orientierungswechsel eingespart werden.

Somit können die Pakete in ihrer Förderausrichtung eingelagert werden.
Bei Paketen mit rechteck- und quadrat-ähnlichem Paketboden handelt es sich bei der Länge und Breite jeweils um die einen Winkel bildenden Seiten des den Paketboden nachbildenden Rechtecks bzw. Quadrats. Bei einem dreieck-ähnlichen Paketboden handelt es sich um die die Hypotenuse und die darauf rechtwinklig stehende Höhe des den Paketboden nachbildenden Dreiecks. Bei ellipsen-ähnlichem Paketboden handelt es sich bei Länge und Breite um die Haupt- und Nebenachse der den Paketboden nachbildenden Ellipse.

Erfindungsgemäß können daher auch Pakete, dessen Paketböden durch eine nichtrotationssymmetrische Form nachgebildet werden können, durch eine Änderung ihrer Ausrichtung um 90 Grad platzsparender eingelagert werden.

Der Aufbau des Lagersystems kann sich hierbei durch ein Hochregallager ausbilden, welches mehrere paarweise angeordnete und durch Lagerregalgassen beabstandete Fachbodenregale umfasst, in Kombination mit einem Fördersystem, welches aus einer Verteilstrecke und mehreren Einlagerstrecken besteht. Dabei verläuft die Verteilstrecke außerhalb der Lagerregale des Hochregallagers durch das Lager und weist an mehreren Stellen Ausschleusungen aus der Verteilstrecke in die Einlagerstrecken in Richtung der Lagerregale auf. Die Einlagerstrecken kreuzen sich an mehreren Punkten, bevor sie an den Einlagerliften der Lagerregale enden. An den Kreuzungspunkten befindet sich je eine 90 Grad Weiche zur Änderung der Paketorientierung. Bei den Lagerregalen des Hochregallagers kann es sich beispielsweise um Fachbodenregale handeln. Über Einlagerlifte und Pufferstationen können viereckige Fachböden der Regale durch Regalbediengeräte oder Shuttle-Fahrzeuge erreicht werden.

In konstruktiv vereinfachender und platzsparender Weise ist vorgesehen, dass über jede Ausschleusung der Verteilstrecke und der folgenden Einlagerstrecke mindestens zwei Lagerregalgassen zugänglich sind. Dies ermöglicht für jedes Paket bei einer Ausschleusung die Wahl zwischen zwei Lagerregalgassen und somit zwischen vier Regalen.

Neben der Sortierbarkeit der Pakete durch die Ansteuerung zweier Lagerregalgassen anstatt nur einer, besteht ein weiterer Vorteil der kreuzweisen Anordnung der Einlagerstrecken in der Ersparnis eines weiteren Förderelements. So wäre für eine Umsetzung einer doppelten Einlagermöglichkeit in zwei Regalgassen über nur eine Ausschleusung ein weiteres Förderelement nötig, um die eine Ausschleusung mit einer zweiten Lagerregalgasse zu verbinden. Somit ist erfindungsgemäß mehr Funktionalität des Fördersystems bei Einsparung weiterer Fördertechnik gegeben. Des Weiteren erfordert die Erfindung gegenüber dem Stand der Technik lediglich zwei Transferförderelemente, d.h. Weichen, und keine zusätzlichen Förderelemente für die Änderung der Paketausrichtung.

Außerdem ist erfindungsgemäß vorgesehen, dass jedes Lagerregal mit Paketen in Quer- und Längsorientierung gefüllt werden kann. Dies bedeutet insbesondere, dass Lagerregale ausschließlich mit Paketen in Querorientierung gefüllt werden können, oder aber auch ausschließlich mit Paketen in Längsorientierung. Ebenso sind Mischregale mit Paketen beider Orientierungen möglich. Das hat zur Folge, dass die Lagerregale des Hochregallagers hinsichtlich der örtlich vorherrschenden räumlichen Bedingungen optimiert werden können und durch eine für ein Regalbediengerät oder Shuttle-Fahrzeug günstige Orientierung der Pakete ggf. sogar die Lagerregallagergassen verschmälert werden können, weil zur Ein- und Auslagerung Regalbediengeräte mit schmalerem Umfang verwendet werden können. Dies führt zu einer allgemein platzsparenderen Anordnung der Regale und ermöglicht die Umsetzung größerer Lagerflächen.

Ein weiterer platzsparender Vorteil ist, dass die Einlagerstrecken zwischen Ausschleusungen und Kreuzungspunkt als Warenpuffer zwischen Verteilstrecke und Lagerregal genutzt werden können. Bei einer ausgelasteten Einlagerstrecke oder einem ausgelasteten Lagerregal können Waren über die Weiche auf eine alternative Einlagerstrecke bzw. in eine alternative Lagerregalgasse umgeleitet werden. Das heißt, Pakete können auf der Einlagerstrecke gepuffert werden und bei einer ausgelasteten Einlagerstrecke auf eine zweite Einlagerstrecke umgeleitet werden. Hierbei kann also durch entsprechendes Stellen der Weiche in die Waren- bzw. Paketverteilung insofern eingegriffen werden, dass Pakete unter Inkaufnahme eines Orientierungswechsels von einer vollen Einlagerstrecke auf eine weniger volle Einlagerstrecke flexibel umgeleitet werden können. Es wird auch hier keine zusätzliche Fördertechnik für die Einrichtung einer Pufferstrecke benötigt.

Nachfolgend wird ein Ausführungsbeispiel der Erfindung an Hand der Zeichnungen näher erläutert. Es zeigen:
Fig. 1 eine schematische Draufsicht eines Fördersystem und eines Hochregallagers zur Ausrichtung und Einlagerung von Paketen.
Fig. 2 eine perspektivische Ansicht auf das Fördersystem und das Hochregallager aus Fig. 1.

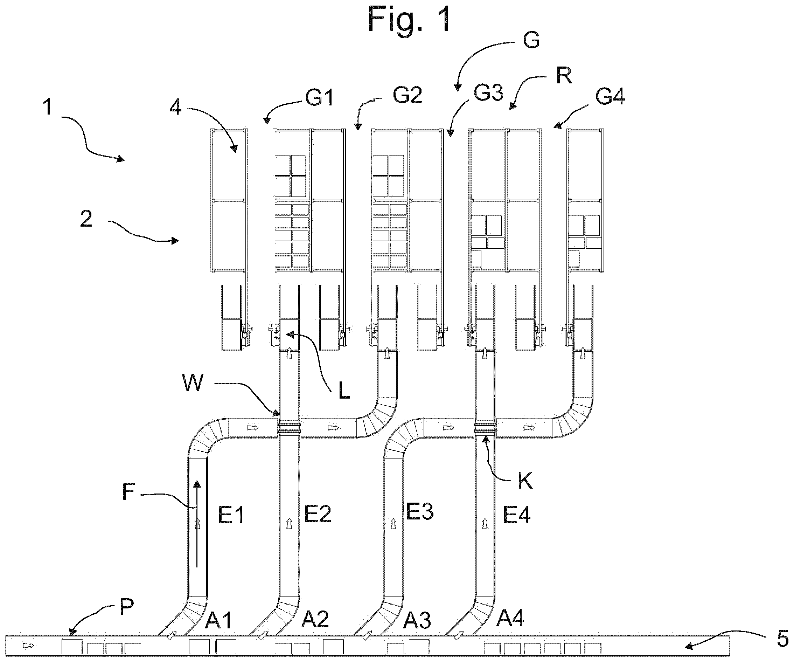

Die Figur 1 zeigt eine Draufsicht auf ein Fördersystem 1 zum Einlagern von Paketen P in ein Hochregallager 2. Das Hochregallager 2 umfasst mehrere Lagerregale R, die Lagerregalgassen G1-G4 bilden, und mehrere Lagerregalebenen 3 mit mehreren viereckigen Fachböden 4 für die Lagerung von Paketen P. Das Fördersystem 1 beinhaltet eine Verteilstrecke 5, welche über mehrere Ausschleusungen A1-A4 und darauffolgenden Einlagerstrecken E1-E4 mit den Lagerregalgassen G1-G4 des Hochregallagers 2 verbunden ist.

Hierbei transportiert die Verteilstrecke 5 außerhalb der Lagerregale R Pakete P durch einen Lagerbereich. Die Verteilstrecke 5 weist mehrere Ausschleusungen A1-A4 in Richtung des Hochregallagers 2 auf. Diese Ausschleusungen A1-A4 verbinden die Verteilstrecke 5 mit den Einlagerstrecken E, welche von der jeweiligen Ausschleusung zu den Lagerregalen R führen. Zwischen Verteilstrecke 5 und Lagerregalen R kreuzen sich die Einlagerstrecken E in einem Kreuzungspunkt K.

Waren bzw. Pakete P werden mit folgendem Verfahren in das Hochregallager 2 eingelagert. Die Pakete P werden entlang der Verteilstrecke 5 bewegt, welche aus einem oder mehreren Förderelementen besteht, beispielsweise Rollenförderern oder Bandförderern.

Von der Verteilstrecke 5 führen die Ausschleusungen A1-A4 seitlich weg in Richtung des Hochregallagers 2. Dabei sind die Ausschleusungen A1-A4 auf der gleichen Seite der Verteilstrecke angeordnet wie das Hochregallager 2 und bestehen ebenfalls aus mehreren Förderelementen, welche als gerade Strecke oder als Biegung angeordnet sein können.

Die erste Ausschleusung A1 und die zweite Ausschleusung A3 sind "S-förmig" angeordnet und kreuzen somit die zweite und vierte Ausschleusung A2 bzw. A3, bevor sie an der zweiten Lagerregalgasse G2 bzw. an der vierten Lagerregalgasse G4 enden. Somit wird die Verteilstrecke 5 durch die vier Ausschleusung A1, A2, A3 und A4 mit den vier Lagerregalgassen G2, G1, G4 und G3 in dieser Reihenfolge direkt verbunden.

Das Fördersystem kann selbstverständlich auch eine kleinere oder größere Anzahl Ausschleusungen A und Lagerregalgassen G umfassen, beispielsweise mindestens je zwei, oder auch sechs oder acht. Immer aber kreuzen sich je zwei der Ausschleusungen A an mindestens einem Kreuzungspunkt K. Der Kreuzungspunkt K ist dabei mit je einer Weiche W versehen. Die Pakete P werden von der Verteilstrecke 5 in eine der Ausschleusungen A befördert. Über die Ausschleusungen A werden die Pakete P zunächst zu einer der Weichen W weitergeleitet.

An der Weiche W können die Pakete P ihre Förderrichtung F beibehalten oder sie werden quer zur Förderrichtung F verschoben. Nach Passieren der Weiche W folgen die Pakete P somit entweder der gleichen Einlagerstrecke E, beispielsweise E1, auf die sie von der jeweiligen Ausschleusung A1, A2, A3 oder A4 ausgeschleust wurden oder sie wechseln über die Weiche W auf eine benachbarte Einlagerstrecke, beispielsweise E2, die sie dann der jeweiligen Lagerregalgasse, beispielsweise G2 oder G1, zuführt.

Die Querverschiebung an der Weiche W führt also zu einem Wechsel der Einlagerstrecke E und zu einer Änderung der Orientierung eines Pakets um 90 Grad.

Durch die Weiche kann daher für jedes Paket aus einer Ausschleusung A1-A4 zwischen Längs- und Querorientierung, zwischen zwei Einlagerstrecken, beispielsweise E1 und E2 oder E3 und E4, und zwei Lagerregalgassen, beispielsweise G2 und G1 oder G4 und G3, gewählt werden. Diese Anordnung der Ausschleusungen erlaubt eine Sortierung der Pakete bei gleichzeitiger Einsparung von zusätzlicher Fördertechnik. Dies wiederum ermöglicht eine platzsparendere Anordnung bei gleichzeitig hohen Warendurchsatz und die Umsetzung größerer Lagerflächen.

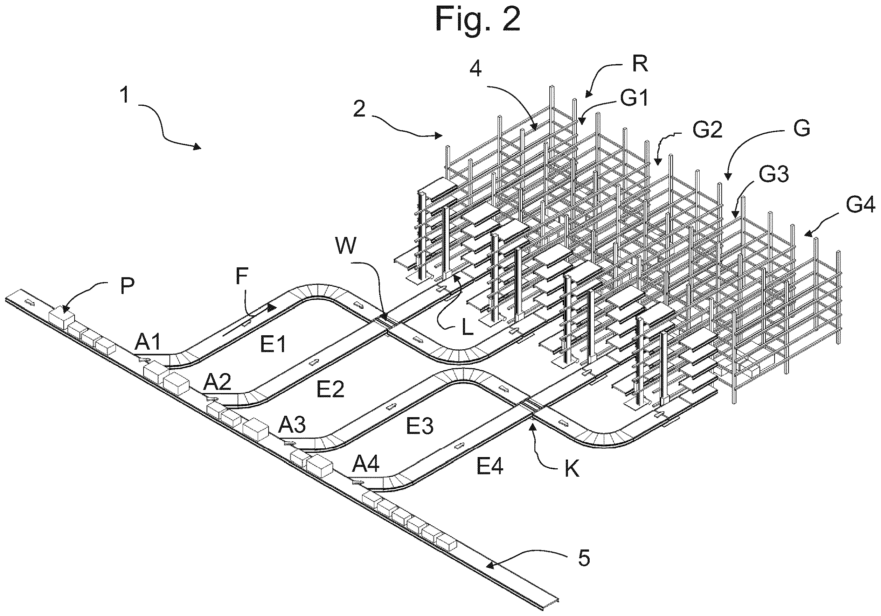

Figur 2 zeigt eine perspektivische Draufsicht auf das Fördersystem 1 und das Hochregallager 2. Nachdem ein Paket P die Weiche W passiert und die gewünschte Quer- oder Längsorientierung bzw. Einlagerungsrichtung erhalten hat, wird es auf einen Einlagerlift L befördert.

Ein Einlagerlift L ist jedem Lagerregal R vorgelagert und quasi als Verlängerung einer Regalseite angeordnet. Der Einlagerlift L verfährt zwischen den einzelnen Lagerregalebenen 3 und verteilt die Waren auf die Lagerregalebenen 3 des Hochregallagers 2. Dort werden sie von Regalbediengeräten bzw. Shuttle-Fahrzeugen aufgenommen und in Fächer des Fachbodenregallagers eingelagert. Dabei ist die Förderrichtung, in der ein Paket P am Einlagerlift L ankommt gleich der Einlagerrichtung. Das heißt, innerhalb des Hochregallagers ist eine weitere Änderung der Paket-Orientierung nicht nötig.

Somit kann jede Lagergasse G1-G4 mit Paketen P beiden Orientierungen, Längs- oder Querorientierung, bestückt werden.

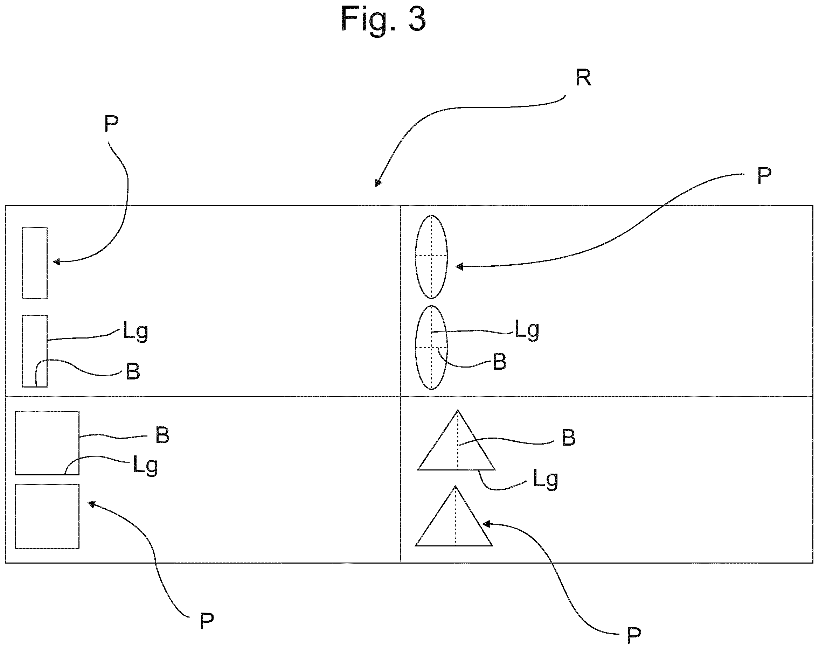

Fig. 3 zeigt bespielhaft mögliche Formen der Pakete P in den Lagerregalen R. Bei Paketen mit rechteck- und quadrat-ähnlichem Paketboden handelt es sich bei der Länge L und Breite B jeweils um die einen Winkel bildenden Seiten des den Paketboden nachbildenden Rechtecks bzw. Quadrats. Bei einem dreieck-ähnlichen Paketboden handelt es sich um die die Hypotenuse und die darauf rechtwinklig stehende Höhe des den Paketboden nachbildenden Dreiecks. Bei ellipsen-ähnlichem Paketboden handelt es sich bei Länge und Breite um die Haupt- und Nebenachse der den Paketboden nachbildenden Ellipse. Von diesen Formen abgesehen können natürlich auch Pakete mit rotationssymmetrischer Grundform in ein Regallager R eingelagert werden. Hier ist die Änderung der Paketorientierung durch die Weiche W jedoch nicht von Vorteil für eine platzsparende Einlagerung. Bei denen in Fig. 3 dargestellten Paketformen und allen anderen Formen, welche eine von der Breite B unterschiedliche Länge L aufweisen, kann eine Orientierungsänderung vorteilhaft für die Einlagerung sein.

Dies führt zu einer platzsparenden Anordnung der Waren, da die für eine möglichst hohen Füllgrad des Regals günstigste Paketorientierung gewählt werden kann. Daraus kann sich der weitere Vorteil einer Verschmälerung der Lagerregalgasse ergeben, da für die Entnahme aus den packungsoptimierten Regalen ein Regalbediengerät in schmalerer Ausführung verwendet werden kann.

### Bezugszeichenliste

1 Fördersystem
2 Hochregallager
3 Lagerebenen
4 Lagerfächer
5 Verteilstrecke
P Pakete
R Lagerregale
G Lagerregalgassen
G1-G4 erste bis vierte Lagerregalgasse
A Ausschleusungen
A1-A4 erste bis vierte Ausschleusung
K Kreuzungspunkt
W Weiche
E Einlagerstrecke
E1-E4 erste bis vierte Einlagerstrecke
F Förderrichtung
L Einlagerlift

## Patentansprüche

1. Verfahren zur Einlagerung von Paketen (P) mit von der Breite (B) unterschiedlicher Länge (L) in ein Lagerregal (R), bei dem die Ausrichtung des Pakets (P) wahlweise in Längs- und Quererstreckung erfolgt und die Ausrichtung zwischen einer Verteilstrecke (5) und der Einlagerung im Lagerregal veränderbar ist, wobei die Verteilstrecke (5) Pakete (P) zur Einlagerung anfördert und mindestens zwei Ausschleusungen (A) aufweist, welche in je eine Einlagerstrecke (E) in Richtung eines Lagerregals (R) führen, wobei die Förderrichtung gleich der Paket-Einlagerrichtung ist,
**dadurch gekennzeichnet,**
**dass** zwischen der Verteilstrecke (5) und dem Lagerregal (R) die Ausrichtung des Pakets (P) um 90 Grad geändert wird, wozu jeweils zwischen der Verteilstrecke (5) und dem Lagerregal (R) zwei Einlagerstrecken (E) sich kreuzend angeordnet sind, wobei über jede Einlagerstrecke (E) mindestens zwei Lagerregalgassen (G) erreichbar sind, und an der Kreuzungsstelle eine 90 Grad Weiche (W) angeordnet ist, um wahlweise die Einlagerstrecke (E) zu wechseln.

2. Verfahren nach Anspruch 1, **dadurch gekennzeichnet, dass** jeweils benachbarte Einlagerstrecken (E) sich kreuzen.

3. Verfahren nach Anspruch 1 und 2, **dadurch gekennzeichnet, dass** jedes Lagerregal (R) Pakete (P) in Quer- und Längsorientierung aufnehmen kann.

4. Verfahren nach Anspruch 1, **dadurch gekennzeichnet, dass** die Einlagerstrecken (E) zwischen der Verteilstrecke (5) und der Weiche (W) als Warenpuffer genutzt werden.

## Claims

1. Method for placing into storage packets (P) having a length (L) different from the width (B) in a storage rack (R), in which the packet (P) is oriented extending longitudinally and transversely as selected and the orientation can be changed between a distribution path (5) and it being placed into storage in the storage rack, wherein the distribution path (5) conveys packets (P) to place them into storage and comprises at least two discharge apparatuses (A) which lead into a respective incoming storage path (E) extending in the direction of a storage rack (R), wherein the conveying direction is the same as the direction for placing packets into storage,
**characterised in that**
between the distribution path (5) and the storage rack (R), the orientation of the packet (P) is changed by 90 degrees, for which purpose in each case two incoming storage paths (E) are disposed in a crossing arrangement between the distribution path (5) and the storage rack (R), wherein via each incoming storage path (E) at least two storage rack aisles (G) can be reached, and a 90 degree switch (W) is disposed at the crossing point in order to change the incoming storage path (E) as selected.

2. Method as claimed in claim 1, **characterised in that** mutually adjacent incoming storage paths (E) cross each other.

3. Method as claimed in claims 1 and 2, **characterised in that** each storage rack (R) can receive packets (P) in a transverse and longitudinal orientation.

4. Method as claimed in claim 1, **characterised in that** the incoming storage paths (E) are used as goods buffers between the distribution path (5) and the switch (W).

## Revendications

1. Procédé de stockage de paquets (P) de longueurs (L) différentes de la largeur (B) dans un rayonnage de stockage (R), dans lequel l'orientation du paquet (P) est effectuée soit suivant l'extension longitudinale, soit suivant l'extension transversale et l'orientation entre une section de distribution (5) et le stockage dans le rayonnage de stockage peut être modifiée, la section de distribution (5) acheminant des paquets (P) vers le stockage et comportant au moins deux sas (A) qui mènent chacun à une section de stockage (E) en direction d'un rayonnage de stockage (R), la direction de transport étant la même que la direction de stockage de paquet,
**caractérisé en ce que**
entre la section de distribution (5) et le rayonnage de stockage (R), l'orientation du paquet (P) est modifié de 90 degrés, ce pour quoi deux sections de stockage (E) sont disposées de manière à se croiser entre la section de distribution (5) et le rayonnage de stockage (R), au moins deux allées de rayonnage de stockage (G) pouvant être atteintes par le biais de chaque section de stockage (E), et un aiguillage à 90 degrés (W) étant disposé au point de croisement afin de changer de section de stockage (E).

2. Procédé selon la revendication 1, **caractérisé en ce que** des sections de stockage adjacentes (E) se croisent.

3. Procédé selon la revendication 1 et 2, **caractérisé en ce que** chaque rayonnage de stockage (R) peut recevoir des paquets (P) suivant l'orientation transversale et l'orientation longitudinale.

4. Procédé selon la revendication 1, **caractérisé en ce que** les sections de stockage (E) entre la section de distribution (5) et l'aiguillage (W) sont utilisées comme tampon de marchandises.
